(19) Europäisches Patentamt
European Patent Office
Office européen des brevets

(11) Publication number: **0 409 265 A2**

(12) **EUROPEAN PATENT APPLICATION**

(21) Application number: **90113959.2**

(22) Date of filing: **20.07.90**

(51) Int. Cl.5: **B01D 69/12**, B01D 71/64, B01D 71/52, B01D 53/22

(30) Priority: **20.07.89 SU 4722296**

(43) Date of publication of application: **23.01.91 Bulletin 91/04**

(84) Designated Contracting States: **BE CH DE FR GB LI SE**

(71) Applicant: **CESKOSLOVENSKA AKADEMIE VED**
**Narodni 3**
**Praha 1(CS)**

Applicant: **AKADEMIA NAUK SSSR**
**Leninskij Prospekt 14**
**117 901 Moskau V-71(SU)**

(72) Inventor: **Bleha, Miroslav**
**Lublanska 46**
**Praha(CS)**
Inventor: **Schauer, Jan**
**Pod Kastany 8/246**
**Praha(CS)**
Inventor: **Polockaja, Andrejevna Galina**
**Leningradskoje sosse 13/I**
**Leningrad(SU)**
Inventor: **Kuznecov, Jurij Petrovic**
**Nalicnaja 36**
**Leningrad(SU)**
Inventor: **Krucinina, Elena Vladimirovna**
**Belgradskaja 26**
**Leningrad(SU)**

(74) Representative: **Patentanwälte Beetz sen. - Beetz jun. Timpe - Siegfried - Schmitt-Fumian- Mayr**
**Steinsdorfstrasse 10**
**D-8000 München 22(DE)**

# (54) Composite polymeric membranes for gas separation and their preparation and use.

(57) The invention relates to composite membranes for the separation of gas mixtures and a method for their preparation. The membranes have a high selectivity in the separation of $He/N_2$ and $O_2/N_2$ mixtures, suitable mechanical properties and a high permeability. They consist of a microporous polymeric base of an aromatic polyimide of the general formula II

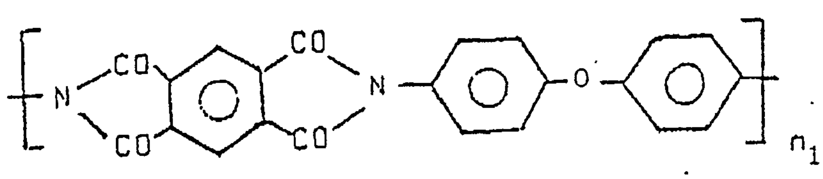

(II),

where $n_1$ = 150 to 240,
and/or a polyamidoimide of the general formula IV,

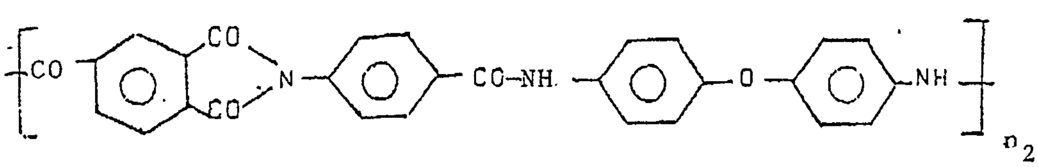

(IV),

EP 0 409 265 A2

where $n_2$ = 140 to 220,
and a polymeric thin selective layer formed from a poly(2,6-dimethyl-1,4-phenyleneoxide) or a derivative thereof, of the general formula I,

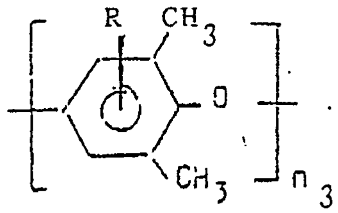

(I),

where $n_3$ = 500 to 1000
and
R = Br, $NO_2$ or $SO_3Me$,
with Me = H, Na, K, Cr or Co.

The method for the preparation of the composite polymeric membranes consists in forming a thin polymeric layer of the polyphenyleneoxide of formula I on the microporous polymeric base of formula II and/or of formula IV.

## COMPOSITE POLYMERIC MEMBRANES FOR GAS SEPARATION AND THEIR PREPARATION AND USE

The invention relates to composite polymeric membranes, a method for their preparation, and their use for the separation of mixtures of gases.

Basic requirements for membranes used in the membrane separation of gases are high permeability and selectivity of separation (Kesting, R.B., "Synthetic Polymer Membranes", New York, A. Wiley-Interscience Publication, 1985, p. 22). Specific membranes are to be chosen for the separation of various vapors and gases. In order to attain a high gas permeability with high selectivity, the thickness of the membranes has to be at least 2 µm, however, for such high thicknesses, the physico-technical parameters become unsatisfactory, microcracks and pores occur, and the membranes are not satisfactorily load resistant.

These shortcomings are overcome in composite membranes which are formed from a thin, nonporous layer for gas separation formed on a microporous polymer base. The base provides the required mechanical and application properties, and, at the same time, practically does not affect the permeability and selectivity. On the contrary, the selective separation layer may be formed very thin; in an extreme case, it may be a monomolecular coating.

Various methods for the preparation of composite membranes for gas separation have already been proposed. In particular, there is known a method for the preparation of selectively permeable membranes (JP-A-180206/58) consisting in dipping a porous polymeric base with a pore diameter of 0.001-5 µm into a bath with a precipitant which improves the pores of the base and produces a thin surface layer. On the base obtained in this way a film is then formed by applying a solution of a polymer in an organic solvent, and the resulting composite product is dried. Polysiloxanes, vinyl polymers and copolymers, polycarbonates, polyesters, and cellulose derivatives are used as polymers; as organic solvents are used halogenated hydrocarbons, aliphatic and cyclic hydrocarbons, ethers, ketones, aldehydes, and/or amines. As said porous bases there can be used molded films on the basis of poly(propylene), polysulfone, poly(vinyl chloride), poly tetrafluoroethylene), and/or cellulose acetate. Water, alcohols, ethers or mixtures thereof are used as precipitants for filling the pores. Membranes prepared in this way have different permeabilities for oxygen and nitrogen, and have a selectivity coefficient $\alpha_{O2/N2}$ = 1.7 - 2.3.

The main disadvantage of these known composite membranes is their low selectivity, and accordingly, they can only be used for the separation of oxygen/nitrogen gas mixtures.

Composite membranes of similar construction where the selective layer is formed from aromatic polyimides, and eventually from polymers with imide structures in the chains, have a higher selectivity for the separation of helium/nitrogen, gas mixtures, but also these membranes are specially suited for the separation of oxygen/nitrogen gas mixtures.

These prior art membranes have a high selectivity for a selected group of gases. Their structure and chemical composition; however, do not allow to extend their separation selectivity to further gases by a chemical modification. There are also problems with their use in general purpose modules for the separation or purification of gas mixtures.

It is the object of the present application to provide composite polymeric membranes with universal applicability and improved selectivity for gas separation, and a method for their preparation.

The above object is achieved according to the claims. The dependent claims relate to preferred embodiments.

The composite polymeric membranes according to the present invention, which are particularly suited for the separation of gas mixtures, consist of a microporous polymeric base and a thin selective polymeric layer; they are characterized in that the microporous polymeric base comprises or consists of an aromatic polyimide of the general formula II,

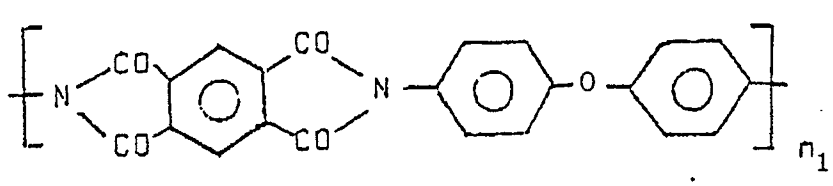

(II),

where $n_1$ = 150 to 240,
and/or a polyamidoimide of the general formula IV,

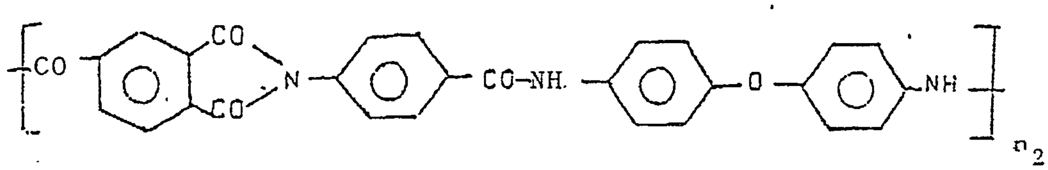 (IV),

where $n_2$ = 140 to 220,
and the selective polymeric layer consists of a poly(2,6-dimethyl-1,4-phenyleneoxide) and/or a derivative thereof, of the general formula I,

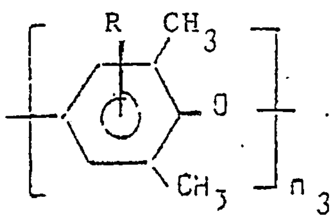 (I),

where $n_3$ = 500 to 1000,
and
R = Br, $NO_2$ or $SO_3Me$,
where Me = H, Na, K, Cr or Co.

The method of the present invention for preparing the above-defined composite polymeric membranes is characterized by forming a thin polymeric layer of a poly(2,6-dimethyl-1,4-phenyleneoxide) and/or a derivative thereof, of the general formula I as defined above on a dry microporous polymeric base on the basis of an aromatic polyimide of the general formula II and/or a polyamidoimide of the general formula IV as defined above.

The microporous polymeric base can be formed according to the present invention from a polymeric acid of the general formula III

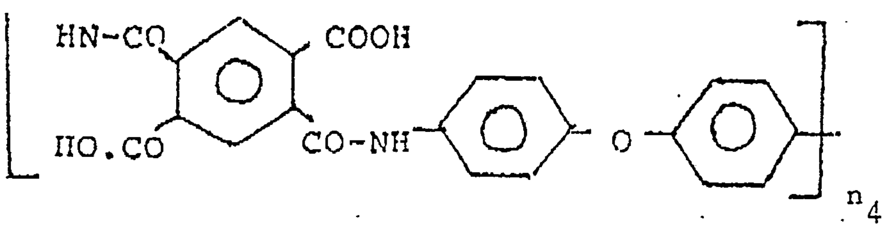 (III),

where $n_4$ = 150 to 240,
with subsequent imidization, preferably chemical imidization, and removal of the excessive solution and drying.

Alternatively, it is also possible to prepare the microporous polymeric base from a polyamidoimide, preferably of the general formula IV as defined above. The polyamidoimide is preferably used in the form of a solution in a polar aprotic solvent, the preferred concentration range of polyamidoimide being from 10 to 15 mass-%. After removal of excessive solution and drying, the selective polymer layer on the basis of poly(2,6-dimethyl-1,4-phenyleneoxide) or a derivative thereof of the general formula I is formed on that polymeric base. A preferred technique for forming the microporous polymeric base is casting, preferably film casting.

In the prior art, it has been known to form homopolymeric membranes for the separation of gases from polyphenyleneoxides of the general formula V,

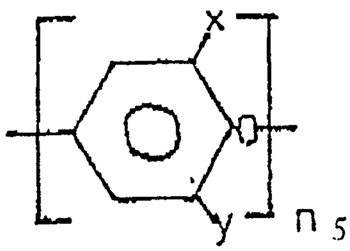

(V),

where X, Y are H, $C_{1-4}$-alkyl, $C_{1-5}$-alkoxy, Cl, Br or F, and n5 = 100 to 180, in the form of films or asymmetric membranes having a thickness of about 0.75 to 25 µm (US-A-3 350 844). The selectivity of these prior art membranes and their rather great thickness result in a low permeability.

On the other hand, the composite membranes according to the present invention have a much higher permeability and good mechanical properties, and, due to the used materials, also high chemical and thermal resistance. The selectivity coefficient of the composite membranes according to the present invention is also higher than for comparable prior art membranes on homopolymer basis.

In the following, the invention will be illustrated by way of examples. The indicated percentage values are on mass basis (mass-%).

Example 1

A layer of a thickness of 400 µm was cast from a 15 solution of a polymeric acid of formula III in dimethylformamide on a glass plate of 12 x 12 cm. The glass plate was then immersed for 2 h at room temperature into an ethanol bath and then for 3 h into a bath of a pyridine-acetic anhydride mixture (1:1 v/v). After this chemical imidization, the obtained membrane was washed with benzene and ethanol and dried at room temperature and then 30 min at a temperature below 300 °C.

The thickness of the obtained microporous membrane was 140 µm.

On this polymeric base, a 2 % solution of poly(2,6-dimethyl-1,4-phenyleneoxide) in chloroform was cast. After removal of the excessive solution and drying at 40 °C in vacuo there was obtained a membrane having an active layer of 0.8 µm in thickness.

The membrane was characterized by the following permeability and selectivity coefficients:

$P_{He} = 4.95 \cdot 10^{-6}\ cm^3 / cm^2 \cdot s \cdot cmHg$

$P_{N2} = 0.061 \cdot 10^{-6} cm^3 / cm^2 \cdot s \cdot cmHg$

$P_{O2} = 0.31 \cdot 10^{-6}\ cm^3 / cm^2 \cdot s \cdot cmHg$

$\alpha_{He2/N2} = 5.1$; $\alpha_{O2/N2} = 5.1$.

Example 2

A layer of a thickness of 400 µm was cast from a 12 % solution of a polymeric acid of formula III in a dimethylformamide-ethylene glycol mixture (9:1 w/w) on a glass plate of 12 x 12 cm, and then immersed at room temperature into a coagulation bath of ethanol for 2 h. After coagulation, subsequent chemical imidization was carried out by immersing the glass plate into a bath consisting of a pyridine-acetic anhydride mixture (1:1 v/v) for 3 h. The obtained microporous membrane was dried in air and then heated to 200 °C for 30 min. A 3 % solution of a polyphenyleneoxide of formula I in chloroform was cast on the polymeric base prepared in this way, and after removal of the excessive solution by placing the membrane vertically, the membrane was dried at 40 °C in vacuo.

The membrane was characterized by the following permeability and selectivity coefficients:

$P_{He} = 4.6 \cdot 10^{-6}\ cm^3 / cm^3 \cdot s \cdot cmHg$

$P_{N2} = 0.062 \cdot 10^{-6}\ cm^3 / cm^2 \cdot s \cdot cmHg$

$P_{CO2} = 1.63 \cdot 10^{-6}\ cm^3 / cm^3 \cdot s \cdot cmHg$

$\alpha_{He/N2} = 74$, $\alpha_{CO2/N2} = 26$.

The membrane was tested for the permeability for $O_2$ and $N_2$ from air:

$P_{O2} = 0.286 \cdot 10^{-6}\ cm^3 / cm^2 \cdot s \cdot cmHg$

$P_{N2} = 0.058 \cdot 10^{-6}\ cm^3 / cm^2 \cdot s \cdot cmHg$

$\alpha_{O2/N2} = 4.9$.

Example 3

A 10 % solution of a polyamidoimide of formula IV in N-methylpyrrolidone was used for the preparation of the microporous polymeric base in the form of a film. This film was prepared in a thickness of 350 µm by casting the solution on a glass plate, placing the glass plate into a coagulation bath of water, and drying at 40 °C. On this polymeric base, a 4 % solution of a polyphenyleneoxide of formula I in chloroform was cast. After removal of the excessive solution and drying at 40 °C there was obtained a membrane which was characterized by the following permeability and selectivity coefficients:

$P_{He} = 9.5 \cdot 10^{-6}\ cm^3 / cm^2 \cdot s \cdot cmHg$

$P_{N2} = 0.11 \cdot 10^{-6}\ cm^3 / cm^2 \cdot s \cdot cmHg$

$P_{O2} = 0.59 \cdot 10^{-6}\ cm^3 / cm^2 \cdot s \cdot cmHg$

$P_{CO2} = 3.31 \cdot 10^{-6}\ cm^3 / cm^2 \cdot s \cdot cmHg$

$\alpha_{He/O2} = 86$, $\alpha_{He/N2} = 16$, $\alpha_{O2/N2} = 5.4$, $\alpha_{CO2/N2} = 30$.

Example 4

On a microporous polymeric base prepared in the same way as described in example 3, a 5 % solution of a sulphonated polyphenyleneoxide (content of sulphur S = 7 %) of formula I in methanol was cast. After removal of the excessive solution and drying, the obtained membrane was characterized by the following permeability and selectivity coefficients:

$P_{He} = 2.4 \cdot 10^{-6}\ cm^3 / cm^2 \cdot s \cdot cmHg$

$P_{N2} = 0.092 \cdot 10^{-6}\ cm^3 / cm^2 \cdot s \cdot cmHg$

$P_{O2} = 0.029 \cdot 10^{-6}\ cm^3 / cm^2 \cdot s \cdot cmHg$

$\alpha_{He/N2} = 26$, $\alpha_{O2/N2} = 3.15$.

Example 5

A microporous polymeric base was prepared in the same way as described in example 1. Onto this polymeric base, a layer of the bromine derivative of a polyphenyleneoxide of formula I was formed by casting from a 30 % solution in chloroform and drying.

The properties of the membranes prepared in this way and also of some others are shown in the following table.

Table

| Membrane | | | | | | Characteristics | | | | | | |
|---|---|---|---|---|---|---|---|---|---|---|---|---|
| Polymer | Base Solvent | Concentration (% ) | Active layer | | | Permeability | | | | Selectivity α | | |
| | | | Polymer | Solvent | Concentration ( % ) | He | $N_2$ | $O_2$ | $CO_2$ | He/$N_2$ | $O_2$/$N_2$ | He/$O_2$ |
| | | | | | | ($x10^{6}$ $cm^3/cm^2 \cdot s \cdot cmHg$) | | | | | | |
| PAI | MP | 10 | PPO | $CHCl_3$ | 3 | 7,5 | 0,13 | 0,70 | - | 58 | 5,4 | 11 |
| PI | DMFA:EG (9:1) | 12 | PPO | $CHCl_3$ | 1 | 13,6 | 0,18 | 0,90 | - | 76 | 5,0 | 15 |
| PI | DMFA | 15 | PPO | $CHCl_3$ | 2,5 | 6,3 | 0,074 | 0,37 | - | 85 | 5,0 | 17 |
| PAI | MP | 10 | PPO | $CHCl_3$ | 6 | 2,4 | 0,028 | 0,15 | - | 86 | 5,3 | 16 |
| PAI | MP | 10 | SPPO | MeOH | 5 | 9,0 | 0,27 | 0,73 | - | 36 | 2,7 | |
| PI | DMFA | 15 | BPPO-1 | $CHCl_3$ | 30 | 1,17 | 0,04 | 0,12 | - | 28 | 2,9 | |
| PI | DMFA | 15 | BPPO-2 | DMFA | 30 | 2,75 | 0,047 | 0,13 | - | 58 | 2,8 | |

PAI = polyamidoimide
PI = polyimide
MP = N-methylpyrrolidone
EG = ethyleneglycol
DMFA = Dimethylformamide
$CHCl_3$ = chloroform
MeOH = methanol
PPO = Polyphenyleneoxide
SPPO = sulfonated PPO
BPPO = brominated PPG.

Example 6

On a microporous base prepared according to example 1, a layer of a sulphonated polyphenyleneoxide of formula I was formed from a 5 % solution. After removal of excessive solution and drying, a membrane having the following permeability and selectivity coefficients was obtained:
$P_{N2} = 0.30 \cdot 10^{-6}\ cm^3 / cm^2 \cdot s \cdot cmHg$
$P_{O2} = 1.33 \cdot 10^{-6}\ cm^3 / cm^2 \cdot s \cdot cmHg$
$\alpha_{O2/N2} = 4.4$.

Example 7

On a microporous base prepared as in example 3, a layer of a nitrated polyphenyleneoxide (content of nitrogen N = 6.23 %) of formula I was cast and dried. The thus prepared membrane had the following permeability and selectivity coefficients:
$P_{N2} = 0.89 \cdot 10^{-6}\ cm^3 / cm^2 \cdot s \cdot cmHg$
$P_{O2} = 3.16 \cdot 10^{-6}\ cm^3 / cm^2 \cdot s \cdot cmHg$
$P_{CO2} = 15.6 \cdot 10^{-6}\ cm^3 / cm^2 \cdot s \cdot cmHg$
$\alpha_{O2/N2} = 3.5$, $\alpha_{CO2/O2} = 5.0$.

Example 8

On a microporous polymeric base of a polyamidoimide prepared as in example 3, a layer of a brominated polyphenyleneoxide (content of bromine Br = 87 %) of formula I was cast and dried. The prepared membrane had the following permeability and selectivity coefficients:
$P_{N2} = 1.37 \cdot 10^{-6}\ cm^3 / cm^2 \cdot s \cdot cmHg$
$P_{O2} = 5.61 \cdot 10^{-6}\ cm^3 / cm^2 \cdot s \cdot cmHg$
$\alpha_{O2/N2} = 4.1$.

The composite polymeric membranes of the present invention have a particularly high selectivity for the separation of $He/N_2$ and $O_2/N_2$ mixtures, together with high permeability and very good mechanical properties.

## Claims

1. Composite polymeric membranes, particularly for the separation of mixtures of gases, consisting of a microporous polymeric base and a thin selective polymeric layer, characterized in that the microporous polymeric base is on the basis of an aromatic polyimide of the general formula II,

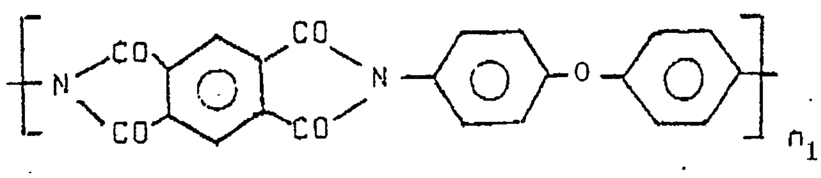

(II),

where $n_1 = 150$ to 240,
and/or a polyamidoimide of the general formula IV,

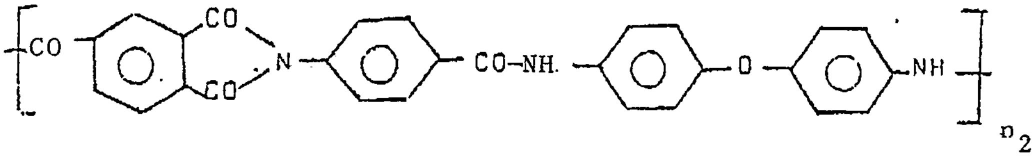

(IV),

where $n_2$ = 140 to 220,
and the thin selective polymeric layer consists of a poly(2,6-dimethyl-1,4-phenyleneoxide) and/or a derivative thereof, of the general formula I,

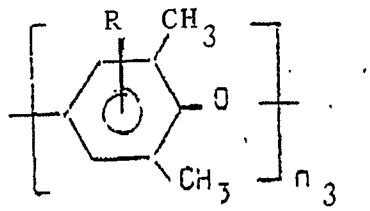

(I)

where $n_3$ = 500 to 1000
and
R = Br, $NO_2$ or $SO_3Me$,
where Me = H, Na, K, Cr or Co.

2. A method for the preparation of the composite membranes according to claim 1,
characterized by
forming a thin polymeric layer of a poly (2,6-dimethyl-1,4-phenyleneoxide) and/or a derivative thereof, of the general formula I,

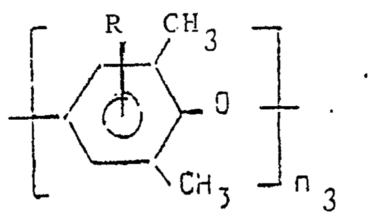

(I),

where $n_3$ =500 to 1000,
and
R = Br, $NO_2$ or $SO_3Me$,
where Me = H, Na, K, Cr or Co,
on a dry microporous polymeric base on the basis of an aromatic polyimide of the general formula II,

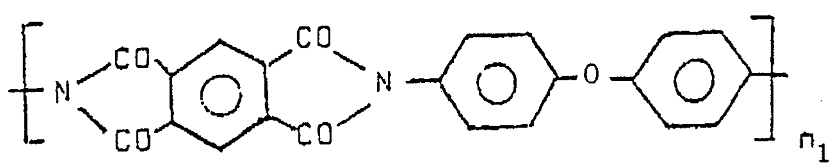

(II),

where $n_1$ = 150 to 240,
and/or a polyamidoimide of the general formula IV,

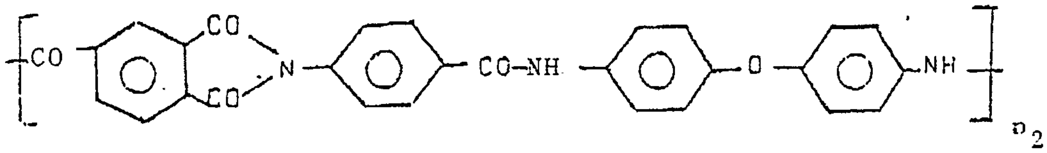

(IV),

where $n_2$ = 140 to 220.

3. The method according to claim 2, characterized in that at first the microporous polymeric base is formed by casting, preferably film casting, of a solution of a polymeric acid of the general formula III,

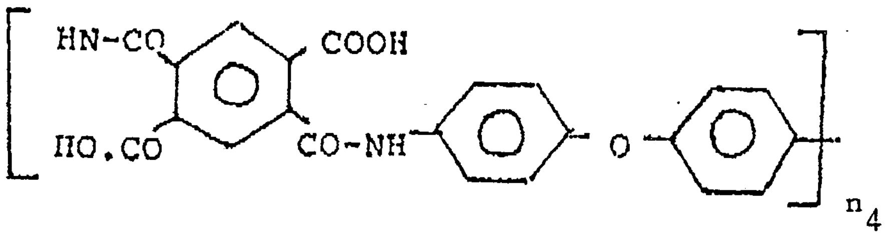

(III),

where $n_4$ = 150 to 240,
subsequent imidization, preferably chemical imidization, and removal of the solvent and drying.

4. The method according to claim 3, characterized in that for the solution of the polymeric acid of formula III a polar solvent, preferably a polar aprotic solvent, is used.

5. The method according to claims 3 and 4, characterized in that a 10 to 15 mass-% solution of the polymeric acid of formula III is used for casting the microporous polymeric base.

6. The method according to claims 3 to 5, characterized in that the thin selective polymeric layer is formed on the polymeric base from a 1 to 6 mass-% solution of the compound of the general formula I.

7. Use of the composite polymeric membranes according to claim 1 for the separation of gas mixtures.

8. Use of the compoiste polymeric membranes according to claim 1 for the separation of $O_2$ and $N_2$.

9. Use of the composite polymeric membranes according to claim 1 for the separation of $O_2$, $N_2$, $CO_2$ and/or He.